# EUROPÄISCHE PATENTSCHRIFT

(11) **EP 3 727 874 B1**
(45) Veröffentlichungstag und Bekanntmachung des Hinweises auf die Patenterteilung: **16.02.2022**
(21) Anmeldenummer: 18825657.2
(22) Anmeldetag: 17.12.2018
(51) Int. Cl.: B60B 39/02, B60B 39/08, B61C 15/10

(54) **STREUMITTELAUSTRAGVORRICHTUNG FÜR SCHIENENFAHRZEUGE**
GRIT-DISPENSING DEVICE FOR RAIL VEHICLES
DISPOSITIF DE DISTRIBUTION D'ÉPANDAGE POUR VÉHICULES FERROVIAIRES

(30) Priorität: 20.12.2017 DE 202017107772 U
(43) Veröffentlichungstag der Anmeldung: 28.10.2020
(73) Patentinhaber: Hanning & Kahl GmbH & Co. KG, 33813 Oerlinghausen (DE)
(72) Erfinder: ALTENBEREND, Martin, 33813 Oerlinghausen (DE); VOIGT, Marcel, 33813 Oerlinghausen (DE)
(74) Vertreter: Ter Meer Steinmeister & Partner
(86) Internationale Anmeldenummer: PCT/EP2018/085304
(87) Internationale Veröffentlichungsnummer: WO 2019/121563

(56) Entgegenhaltungen:
- EP-A1- 2 311 653
- EP-B1- 2 311 653
- WO-A1-2008/064747
- DE-A1- 2 938 583
- DE-A1-102004 014 360
- DE-U1-202014 102 881
- DE-U1-202017 107 772

## Beschreibung

Die Erfindung betrifft eine Streumittelaustragvorrichtung für Schienenfahrzeuge, mit einem Streumitteltank, einer Druckluftquelle, die über eine Druckleitung und eine Düse mit einer Austragleitung für das Streumittel verbunden ist, einem Ansaugkanal, über den das Streumittel aus dem Streumitteltank in die Austragleitung zuführbar ist, einem Bypass, der von der Druckleitung unter Umgehung der Düse zu einem Punkt in der Austragleitung stromabwärts der Mündung des Ansaugkanals führt und dessen Durchlassquerschnitt durch ein Ventil steuerbar ist, und mit einer elektronischen Steuereinrichtung für das Ventil.

Vorrichtungen dieser Art dienen bei Schienenfahrzeugen dazu, Sand oder ein anderes Streumittel unmittelbar vor dem Aufstandspunkt eines Rades des Schienenfahrzeugs auf die Lauffläche des Schienenkopfes zu streuen, damit die Reibung zwischen Rad und Schiene erhöht wird, und so beim Anfahren eine höhere Traktion und beim Bremsen ein kürzerer Bremsweg erreicht wird. Die Ausbringung des Streumittels auf die Schiene sollte möglichst gleichmäßig folgen, damit stabile Anfahr- und Bremsbedingungen sichergestellt werden können.

Ein Beispiel einer Streumittelaustragvorrichtung der oben genannten Art ist in EP 2 311 653 B1 beschrieben. Durch die Düse wird die Druckluft mit erhöhter Geschwindigkeit in den Austragkanal ausgestoßen, so dass das Streumittel nach dem Strahlpumpenprinzip über die Ansaugleitung angesaugt und dann zusammen mit der Druckluft durch die Austragleitung transportiert werden kann. Wenn das Ventil im Bypass geöffnet wird, so nimmt der Volumenstrom und die Strömungsgeschwindigkeit der durch die Düse strömenden Druckluft ab, so dass entsprechend weniger Streumittel angesaugt wird. Durch geeignete Einstellung des Öffnungsquerschnitts des Ventils lässt sich so die ausgebrachte Streumittelmenge dosieren. Bei der bekannten Vorrichtung hat der Bypass im Verhältnis zum Düsenquerschnitt einen relativ großen Querschnitt, so dass bei ganz geöffnetem Ventil der Volumenstrom durch die Düse nahezu vollständig zum Erliegen kommt. Durch die Druckluft, die dann über den Bypass in die Austragleitung strömt, kann die Austragleitung freigeblasen werden. Auf diese Weise kann Verstopfungen der Austragleitung vorgebeugt werden, indem in gewissen Abständen auf die Betriebsart mit vollständig geöffnetem Ventil umgeschaltet wird.

Aus DE 20 2014 102 881 U1 ist eine Streumittelaustragvorrichtung bekannt, bei der zur Dosierung des Streumittels ein pulsweitenmoduliertes Magnetventil vorgesehen ist.

Aufgabe der Erfindung ist es, eine Streumittelaustragsvorrichtung zu schaffen, die eine einfachere und genauere Dosierung des Streumittels erlaubt.

Diese Aufgabe wird erfindungsgemäß dadurch gelöst, dass die Steuereinrichtung dazu ausgebildet ist, das Ventil intervallweise zu öffnen und zu schließen, mit einer Frequenz, die so auf die Länge der Austragleitung abgestimmt ist, dass sich die in den einzelnen Öffnungsperioden des Ventils ausgestoßenen Chargen des Streumittels in der Austragleitung zu einem stetigen Streumittelstrom vereinigen.

Bei der erfindungsgemäßen Vorrichtung ist die im zeitlichen Mittel aufgebrachte Streumittelmenge durch das Verhältnis zwischen der Dauer der Schließperioden und der Dauer der Öffnungsperioden des Ventils bestimmt. Je kürzer die Schließperioden des Ventils sind, desto kürzer sind die Intervalle, in denen die Druckluft mit hohem Volumenstrom und hoher Geschwindigkeit durch die Düse strömt und in denen das Streumittel wirksam angesaugt wird. Zum Dosieren der Streumittelmenge wird somit kein Proportionalventil benötigt, sondern es kann ein einfach aufgebautes Ventil verwendet werden, das nur zwischen einer vollständig geöffneten Stellung und einer vollständig geschlossenen Stellung umschaltbar ist. Die Ansteuerung dieses Ventils kann beispielsweise mittels eines von der Steuereinrichtung erzeugten Impulssignals erfolgen, dessen Tastverhältnis dann die mittlere Streumittelmenge bestimmt.

Da jedoch bei dieser Vorrichtung die Düse nur intervallweise aktiv ist, wird das Streumittel nicht gleichmäßig angesaugt, sondern in getrennten, zeitlich aufeinanderfolgenden Chargen, die den Schließperioden des Ventils entsprechen. Bei hinreichend hoher Frequenz des Steuersignals folgen jedoch die einzelnen Chargen in so kurzen Abständen aufeinander, dass es auf dem Weg des Streumittels durch die Austragleitung aufgrund von Geschwindigkeitsunterschieden zwischen den einzelnen Streumittelpartikeln zu einer Dispersion der Chargen kommt, so dass diese sich zum Auslass der Austragleitung hin zu einem stetigen Streumittelstrom vereinigen und somit das Streumittel trotz des Intervallbetriebs des Ventils im wesentlichen gleichmäßig ausgebracht werden kann.

Vorteilhafte Ausgestaltungen und Weiterbildungen der Erfindung sind in den Unteransprüchen angegeben.

Das Ventil, das beispielsweise elektromagnetisch betätigt werden kann, ist in einer vorteilhaften Ausführungsform als Klappventil mit zwei Stellungen ausgebildet, das in einer Stellung den Zugang zum Bypass versperrt und den Strömungsweg zur Düse offen hält und in der anderen Stellung den Zugang zum Bypass offen hält und den Strömungsweg zur Düse versperrt. In der Stellung, in der der Strömungsweg zur Düse versperrt ist, wird dann keinerlei Streumittel angesaugt, so dass dieser Betriebszustand auch zum Freiblasen der Austragleitung genutzt werden kann.

In einer vorteilhaften Ausführungsform weist der Bypass zwei parallele Kanäle auf, von denen nur einer durch das intervallweise betätigte Ventil gesteuert wird. Der andere Kanal kann ständig offen bleiben oder mittels eines manuell einstellbaren oder elektronisch betätigten aber relativ langsam ansprechenden Ventils gedrosselt werden, so dass über diesen Bypasskanal ständig eine gewisse Luftmenge in den Austragkanal zugeführt wird, damit einem Verstopfen des Austragkanals vorgebeugt wird. Zugleich kann durch das Zusammenwirken des intervallweise betätigten Ventils mit dem fest eingestellten oder langsam ansprechenden Ventil eine größere Variationsbreite bei der Grundeinstellung des maximalen Streumitteldurchsatzes erreicht werden.

Die Druckleitung, die Düse, der Bypass und zumindest ein stromaufwärtiger Teil der Austragleitung können zweckmäßig in eine Austrageinheit integriert sein, die sich so an den Streumitteltank anbauen lässt, dass sie einen Teil des Bodens des Streumitteltanks bildet. Dabei können das Ventil und die zugehörige Betätigungseinheit ebenfalls in die Austrageinheit integriert und beispielsweise so angeordnet sein, dass sie sich im Inneren des Streumitteltanks befinden. Die Zufuhr des Steuersignals zu dem Ventil erfolgt dann vorzugsweise über einen Anschluss, der sich in dem von außen zugänglichen Teil der Austrageinheit befindet.

Im folgenden wird ein Ausführungsbeispiel anhand der Zeichnung näher erläutert. Es zeigen:
- Fig. 1: einen schematischen Schnitt durch eine erfindungsgemäße Streumittelaustragvorrichtung;
- Fig. 2: die wesentlichen Teile der Vorrichtung nach Fig. 1 in einem anderen Betriebszustand;
- Fig. 3: eine Prinzipskizze der Streumittelaustragvorrichtung an einem Radsatz eines Schienenfahrzeugs;
- Fig. 4: einen schematischen Längsschnitt durch einen Abschnitt einer Austragleitung, durch welche das Streumittel transportiert wird; und
- Fig. 5: ein Zeitdiagramm zur Illustration unterschiedlicher Steuersignalverläufe.

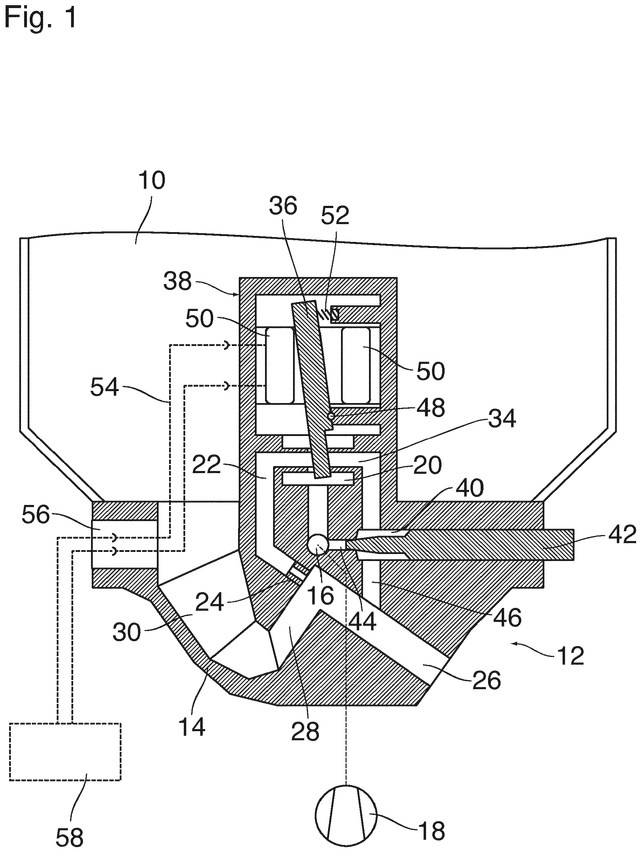

Die in Fig. 1 gezeigte Streumittelaustragvorrichtung weist einen Streumitteltank 10 auf, der in seinem unteren Teil trichterförmig ausgebildet ist und dessen Boden an der tiefsten Stelle durch eine lösbar angeflanschte Austrageinheit 12 gebildet wird. In einem Gehäuseblock 14 der Austrageinheit 12 ist eine Zufuhrleitung 16 ausgebildet, die in Fig. 1 senkrecht zur Zeichenebene verläuft und an eine hier nur schematisch gezeigte Druckluftquelle 18 angeschlossen ist. Die Zufuhrleitung 16 ist über eine Ventilkammer 20 mit einer Druckleitung 22 verbunden, durch welche die Druckluft über eine Düse 24 koaxial in eine Austragleitung 26 für das Streumittel eingedüst wird. Der stromabwärtige Teil der Druckleitung 22, die Düse 24 und der Austragkanal 26 sind im gezeigten Beispiel schräg zur Vertikalen angeordnet, wenn die Austrageinheit 12 am Streumitteltank 10 montiert ist. Beispielsweise bildet die Achse der Austragleitung 26 mit der Vertikalen einen Winkel von etwas mehr als 45°. Das obere Ende der Austragleitung 26, also das Ende, an dem sich die Düse 24 befindet, ist mit einem Ansaugkanal 28 verbunden, der rechtwinklig von der Austragleitung 26 abgeht und somit zu der Austragleitung hin unter einem Winkel von etwas mehr als 45° ansteigt. Das untere Ende des Ansaugkanals 28 ist über einen in dem Gehäuseblock 14 gebildeten Krümmer 30 mit dem Inneren des Streumitteltanks 10 verbunden.

Das Streumittel aus dem Streumitteltank 10 rieselt somit durch Schwerkraftwirkung in den Krümmer 30. Der Höhenunterschied zwischen der tiefsten Stelle des Krümmers und dem oberen Ende des Ansaugkanals 28 ist jedoch so groß, dass das Streumittel nicht allein durch Schwerkraftwirkung in die Austragleitung 26 überläuft. Erst wenn über die Düse 24 Druckluft in die Austragleitung 26 eingestrahlt wird, entsteht im oberen Ende der Austragleitung 26, die hier einfach durch eine zylindrische Bohrung im Gehäuseblock 14 gebildet wird, ein Unterdruck, so dass das Streumittel nach dem Strahlpumpenprinzip angesaugt und dann zusammen mit der Druckluft durch die Austragleitung 26 zu deren auslassseitigem Ende transportiert wird.

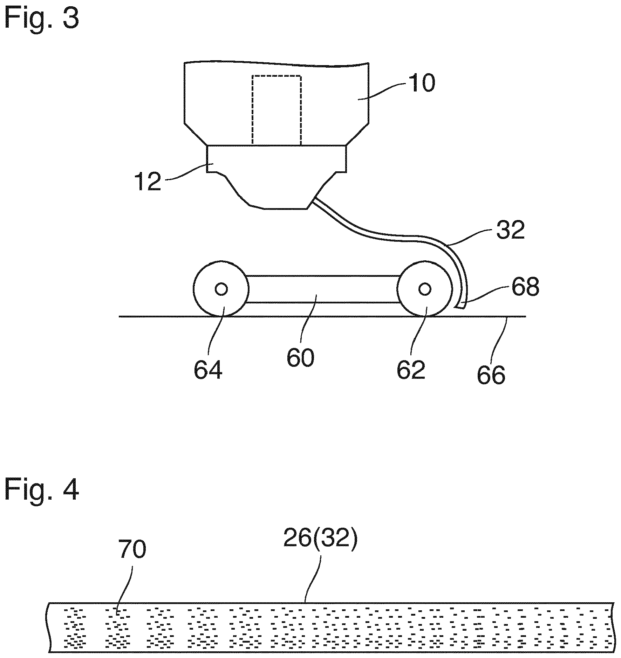

Wie in Fig. 3 gezeigt ist, wird die Austragleitung 26 außerhalb des Gehäuseblockes 14 durch eine als Schlauch oder Rohr ausgebildete Leitung 32 verlängert, die somit ebenfalls Teil der Austragleitung ist.

Die in Fig. 1 gezeigte Ventilkammer 20 ist Teil eines Leitungssystems, das von der Zufuhrleitung 16 vertikal längs der Achse des Gehäuseblocks 14 nach oben verläuft und sich oberhalb der Ventilkammer 20 in die Druckleitung 22 und einen ersten Bypasskanal 34 verzweigt. Der Einlass des Bypasskanals 34 liegt dem Einlass der Druckleitung 22 gegenüber. Beide Einlässe bilden Ventilsitze für ein Ventilglied 36 eines elektromagnetisch betätigten Ventils 38, das in einem Teil des Gehäuseblocks 14 aufgenommen ist, der sich im Inneren des Streumitteltanks 10 befindet.

Der erste Bypasskanal 34 führt zu einer Ventilkammer 40 eines von Hand einstellbaren Stellventils 42. Ein zweiter Bypasskanal 44 führt unmittelbar von der Zufuhrleitung 16 zu der Ventilkammer 40, und ein dritter Bypasskanal 46 verbindet die Ventilkammer 40 mit einem Punkt der Austragleitung 26 stromabwärts der Einmündungsstelle des Ansaugkanals 28.

Das Stellventil 42 ist als Nadelventil ausgebildet, mit dem sich der Querschnitt des Durchlasses vom ersten Bypasskanal 44 zur Ventilkammer 40 stufenlos einstellen lässt. Je weiter das Stellventil 42 geöffnet ist, desto größer ist der Anteil der Druckluft, der über den zweiten Bypasskanal 44 und den dritten Bypasskanal 46 unmittelbar zur Austragleitung 26 strömt und keine Ansaugung von Streumittel bewirkt, sondern lediglich dazu dient, die Austragleitung 26 einschließlich der daran anschließenden Leitung 32 von Streumittelresten oder sonstigen Verunreinigungen frei zu halten.

Das Stellglied 36 des Ventils 38 ist um eine in Bezug auf den Gehäuseblock 14 feste Achse 48 schwenkbar und ragt mit seinem unteren Teil durch den Zwischenraum zwischen den an den Einlässen der Druckleitung 22 und des ersten Bypasskanals 34 gebildeten Ventilsitzen in die Ventilkammer 20. In dem in Fig. 1 gezeigten Zustand liegt das Ventilglied 36 an dem Ventilsitz an, der am Einlass des ersten Bypasskanals 34 gebildet ist, so dass der erste Bypasskanal geschlossen gehalten wird. In diesem Zustand strömt somit die gesamte Druckluft, die nicht über den zweiten Bypasskanal 44 abfließen kann, über die Druckleitung 22 und die Düse 24 in die Austragleitung 26, wo sie das Ansaugen und Austragen von Streumittel bewirkt.

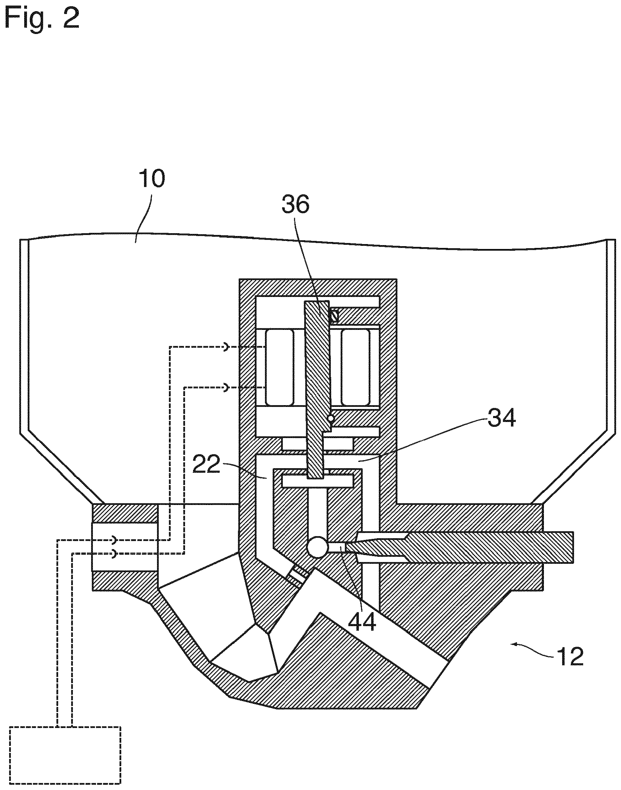

Der oberhalb der Achse 48 liegende Teil des Ventilglieds 36 bildet einen Magnetanker, der in einer Spule 50 einer elektromagnetischen Betätigungseinheit liegt und durch eine Feder 52 elastisch in die in Fig. 1 gezeigte Stellung vorgespannt ist. Wenn die Spule 50 über elektrische Zuleitungen 54 bestromt wird, zieht sie das Ventilglied 36 in die entgegengesetzte Endlage, die in Fig. 2 gezeigt ist und in der das Ventilglied an dem Ventilsitz anliegt, der durch den Einlass der Druckleitung 22 gebildet wird. In diesem Zustand ist somit der Zugang zur Druckleitung 22 gesperrt, so dass die gesamte Druckluft über die Bypasskanäle 34 und 44 und dann weiter über den dritten Bypasskanal 46 abströmt. In diesem Zustand ist somit der Streumittelaustrag vollständig unterbrochen.

Die elektrischen Zuleitungen 54 führen innerhalb des Gehäuseblockes 14 zu einer in diesem Gehäuseblock gebildeten Anschlussbuchse 56, an die eine elektronische Steuereinrichtung 58 für das Ventil 38 angeschlossen ist. Die Anschlussbuchse 56 befindet sich in einer gut zugänglichen Position an dem Teil des Gehäuseblockes 14, der sich unterhalb des Streumitteltanks 10 befindet.

Wenn die Streumittelaustragvorrichtung in Betrieb ist, liefert die Steuereinrichtung 58 ein rechteckförmiges Impulssignal an die Spule 50, so dass das Ventilglied 36 abwechselnd zwischen den in Fig. 1 und 2 gezeigten Stellungen umgeschaltet wird. Die Umschaltfrequenz kann dabei beispielsweise in der Größenordnung von 3 bis 20 Hz liegen und richtet sich nach der Länge der Austragleitung 26 einschließlich der anschließenden Leitung 32.

In Fig. 3 sind schematisch ein Drehgestell 60 eines Schienenfahrzeugs und vordere Räder 62 und hintere Räder 64 an diesem Drehgestell sowie ein Abschnitt einer Schiene 66 gezeigt, auf der die Räder 62, 64 abrollen. Die von der Streumittelaustragvorrichtung kommende Leitung 32 endet in einer Düse 68 unmittelbar vor den Aufstandspunkten der vorderen Räder 62. Der Streumitteltank 10 und die Austrageinheit 12 sind mit Hilfe einer nicht gezeigten Halterung fest am Drehgestell oder wahlweise auch am Fahrzeugaufbau montiert. Im letzteren Fall sollte die Leitung 32 flexibel sein.

Fig. 4 zeigt schematisch einen Längsschnitt durch einen Abschnitt der Austragleitung 26 oder der daran anschließenden Leitung 32. Aufgrund des Intervallbetriebs des Ventils 38 wird das Streumittel in Chargen 70 abgegeben, wobei jede Charge innerhalb eines Intervalls erzeugt wird, in dem sich das Ventil in dem in Fig. 1 gezeigten Zustand befindet. Die Druckluft und die Chargen 70 des Streumittels strömen in Fig. 4 von links nach rechts. Im stromaufwärtigen Bereich der Austragleitung sind die Chargen 70 noch deutlich voneinander getrennt. Da jedoch die Streumittelpartikel nicht alle die gleiche Geschwindigkeit haben, kommt es während des Transports durch die Austragleitung zu einer allmählichen Dispersion der Chargen 70, so dass diese sich immer weiter auseinanderziehen und sich zum stromabwärtigen Ende der Austragleitung hin vereinigen, wie rechts in Fig. 4 dargestellt ist. Auf diese Weise wird an der Düse 68 ein stetiger Streumittelstrom mit praktisch konstantem Streumitteldurchsatz erreicht. Je größer die Gesamtlänge der Austragleitung 26 und der Leitung 32 ist, desto kleiner kann die Umschaltfrequenz des Ventils 38 gewählt werden.

Die im zeitlichen Mittel je Zeiteinheit abgegebene Menge an Streumittel ist in jedem Fall durch das Tastverhältnis des Impulssignals bestimmt, mit dem die Spule 50 angesteuert wird. Indem mittels der Steuereinrichtung 58 dieses Tastverhältnis variiert wird, lässt sich somit die Austragmenge an Streumittel nach Bedarf einstellen und präzise dosieren.

Obgleich das Ventil 38 einen sehr einfachen Aufbau hat und nur zwei mögliche Schaltstellungen aufweist, lässt sich durch Pulsweitenmodulation des Steuersignals eine präzise Dosierung erreichen, und durch Änderung der Modulation kann zudem die Streumittelmenge sehr rasch an den aktuellen Bedarf angepasst werden.

Bei dem in Fig. 1 gezeigten Aufbau sind alle beweglichen Teile der Vorrichtung, insbesondere das Ventilglied 36, so angeordnet, dass sie wirksam gegen das Eindringen von Streumittel geschützt sind und somit nicht der abrasiven Wirkung des Streumittels unterliegen.

Das Tastverhältnis des Steuersignals kann im Prinzip zwischen 0 und 100% variieren. Bei einem Tastverhältnis von 0% ist die Druckleitung 22 ständig geöffnet (Fig. 1). Der Durchsatz an Streumittel wird dann durch die Einstellung des Stellventils 42 bestimmt. Bei einem Tastverhältnis von 100% findet kein Streumittelaustrag statt, auch dann nicht, wenn die Druckquelle 18 weiterhin aktiv ist. In diesem Zustand kann ein wirksames Freiblasen der Austragleitung 26 und der Leitung 32 mit der gesamten zur Verfügung stehenden Druckluftmenge erreicht werden.

Im allgemeinen wird das Tastverhältnis so in Abhängigkeit von der Fahrgeschwindigkeit des Fahrzeugs variiert werden, dass je gefahrenem Meter die gleiche Menge an Streumittel ausgebracht wird. Wenn jedoch der als Druckquelle 18 dienende Kompressor aus einer Spannungsquelle gespeist wird, deren Spannung signifikanten Schwankungen unterliegt, so kann das Tastverhältnis auch zusätzlich in Abhängigkeit von der Betriebsspannung des Kompressors variiert werden, um Leistungsänderungen des Kompressors auszugleichen.

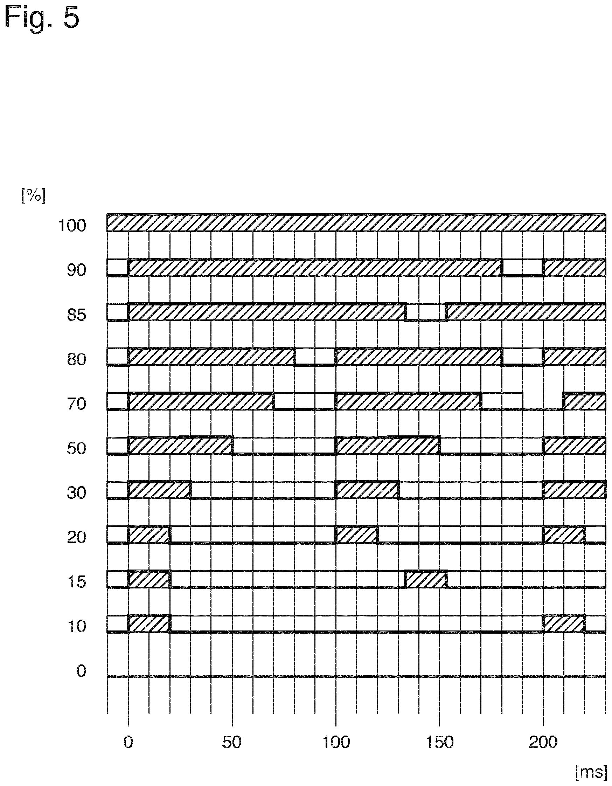

Da das Ventil 38 in der Praxis eine gewisse Trägheit aufweisen wird, können bei fester Frequenz des Steuersignals Tastverhältnisse in der Nähe von 0 % sowie Tastverhältnisse in der Nähe von 100 % unter Umständen nicht mit der gewünschten Genauigkeit reproduziert werden. Es ist deshalb zweckmäßig, für das pulsweitenmodulierte Steuersignal eine gewisse Mindestdauer der Nutzimpulse und ebenso eine gewisse Mindestdauer der Impulslücken festzulegen und, wenn diese Mindestdauer unterschritten wird, das Tastverhältnis durch Verringerung der Frequenz des Pulsweitenmodulationssignals anzupassen. Ein Beispiel für ein solches Schema zur Pulsweitenmodulation ist in Fig. 5 gezeigt. Auf der horizontalen Achse ist dort die Zeit in Millisekunden aufgetragen, und es sind verschiedene Signalverläufe für Tastverhältnisse zwischen 0 und 100 % dargestellt. Bei einem Tastverhältnis in der Nähe von 50 % hat das Pulsweitenmodulationssignal eine Frequenz von 10 Hz und dementsprechend eine Periodendauer von 100 ms. Bei einem Tastverhältnis von genau 50 % haben somit die Nutzimpulse eine Dauer von 50 ms und die Impulslücken ebenfalls eine Dauer von 50 ms. Ein Tastverhältnis von 30 % lässt sich bei unveränderter Frequenz dadurch darstellen, dass die Impulsdauer auf 30 ms verkürzt wird. Entsprechend kann durch eine Verkürzung der Pulsdauer auf 20 ms ein Tastverhältnis von 20 % dargestellt werden. Im gezeigten Beispiel ist dieser Wert von 20 ms die Mindestimpulsdauer für den Nutzimpuls. Um ein Tastverhältnis von 15 % zu realisieren, lässt man deshalb die Nutzimpulsdauer unverändert bei 20 ms, und man verringert statt dessen die Frequenz, so dass die Periodendauer des Modulationssignals auf 133 ms zunimmt. Entsprechend erhält man bei einer Modulationsperiode von 200 ms und einer Nutzimpulsdauer von 20 ms ein Tastverhältnis von 10 %.

Bei Tastverhältnissen von über 80 % hält man die Dauer der Impulslücke auf dem Minimalwert von 20 ms. Ein Tastverhältnis von 85 oder 90 % lässt sich dann durch Vergrößerung der Periodendauer auf 133 ms bzw. 200 ms realisieren.

Weiterhin ist es zweckmäßig, für die Frequenz des Pulsweitenmodulationssignals eine Untergrenze festzulegen. Bei Unterschreiten dieser Untergrenze bleibt die Spule 50 entweder vollständig unbestromt (Tastverhältnis 0 %) oder ständig bestromt (Tastverhältnis 100 %).

## Patentansprüche

1. Streumittelaustragvorrichtung für Schienenfahrzeuge, mit einem Streumitteltank (10), einer Druckluftquelle (18) die über eine Druckleitung (22) und eine Düse (24) mit einer Austragleitung (26) für das Streumittel verbunden ist, einem Ansaugkanal (28), über den das Streumittel aus dem Streumitteltank (10) in die Austragleitung (26) zuführbar ist, einem Bypass (34, 44, 46), der von der Druckleitung (22) unter Umgehung der Düse (24) zu einem Punkt in der Austragleitung (26) stromabwärts der Mündung des Ansaugkanals (28) führt und dessen Durchlassquerschnitt durch ein Ventil (38) steuerbar ist, und mit einer elektronischen Steuereinrichtung (58) für das Ventil (38), **dadurch gekennzeichnet, dass** die Steuereinrichtung (58) dazu ausgebildet ist, das Ventil (38) intervallweise zu öffnen und zu schließen, mit einer Frequenz, die so auf die Länge der Austragleitung (26; 32) abgestimmt ist, dass sich die in den einzelnen Öffnungsperioden des Ventils ausgestoßenen Chargen (70) des Streumittels in der Austragleitung zu einem stetigen Streumittelstrom vereinigen.

2. Vorrichtung nach Anspruch 1, bei der das Ventil (38) ein magnetisch betätigtes Ventil mit zwei Schaltstellungen ist.

3. Vorrichtung nach Anspruch 2, bei der das Ventil (38) ein Klappventil ist, das in einer Schaltstellung die Druckleitung (22) offen hält und einen Bypasskanal (34) sperrt und in der anderen Schaltstellung die Druckleitung (22) sperrt und den Bypasskanal (34) offen hält.

4. Vorrichtung nach einem der vorstehenden Ansprüche, bei der der Bypass (34, 44, 46) zwei parallele Bypasskanäle (34, 44) aufweist, von denen nur einer durch das intervallweise gesteuerte Ventil (38) zu öffnen und zu schließen ist.

5. Vorrichtung nach Anspruch 4, bei der mindestens einer der Bypasskanäle (34, 44) durch ein weiteres Ventil (42) unabhängig vom Zustand des intervallweise gesteuerten Ventils (38) in seinem Öffnungsquerschnitt veränderbar ist.

6. Vorrichtung nach Anspruch 4 oder 5, bei der die beiden Bypasskanäle (34, 44) über einen gemeinsamen dritten Bypasskanal (46) mit der Austragleitung (26) verbunden sind.

7. Vorrichtung nach einem der vorstehenden Ansprüche, bei der die Druckleitung (22), die Düse (24), zumindest ein Teil der Austragleitung (26) und der Ansaugkanal (28) in einem Gehäuseblock (14) gebildet sind, der einen Teil des Bodens des Streumitteltanks (10) bildet, und bei der das Ventil (38) im Inneren des Streumitteltanks (10) an dem Gehäuseblock (14) angeordnet ist.

8. Vorrichtung nach Anspruch 7, bei der elektrische Zuleitungen (54) für das Ventil (38) innerhalb des Gehäuseblockes (14) zu einer Anschlussbuchse (56) geführt sind, die sich in einer zugänglichen Position außerhalb des Streumitteltanks (10) befindet und an die die Steuereinrichtung (58) anschließbar ist.

9. Vorrichtung nach einem der vorstehenden Ansprüche, bei der die Steuereinrichtung (58) dazu ausgebildet ist, das Tastverhältnis, mit dem das Ventil (38) geöffnet und geschlossen wird, situationsabhängig zu variieren.

10. Vorrichtung nach Anspruch 9, bei der die Steuereinrichtung (58) dazu ausgebildet ist, das Tastverhältnis in Abhängigkeit von der Fahrgeschwindigkeit des Schienenfahrzeugs und in Abhängigkeit von der Leistung der Druckluftquelle (18) zu variieren.

11. Vorrichtung nach Anspruch 9 oder 10, bei der die Steuereinrichtung (58) dazu ausgebildet ist, das Ventil (38) mit einem Pulsweitenmodulationssignal mit variabler Frequenz anzusteuern, wobei sowohl die Dauer der Nutzimpulse des Pulsweitenmodulationssignals als auch die Dauer der Lücken zwischen diesen Nutzimpulsen eine bestimmte Mindestdauer nicht unterschreiten und Tastverhältnisse in der Nähe von 0% sowie Tastverhältnisse in der Nähe von 100 % dadurch realisiert werden, dass bei fester Dauer der Nutzimpulse bzw. der Impulslücken die Frequenz des Pulsweitenmodulationssignals innerhalb eines vorgegebenen Variationsbereiches verringert wird.

## Claims

1. A grit dispensing device for rail vehicles, having a grit tank (10); a compressed air source (18) which is connected to a dispensing line (26) for the grit via a pressure line (22) and a nozzle (24); an intake channel (28) via which the grit can be conveyed from the grit tank (10) into the dispensing line (26); a bypass (34, 44, 46) which leads from the pressure line (22) to a point in the dispensing line (26) downstream of the mouth of the intake channel (28) so as to bypass the nozzle (24) and the passage cross-section of which can be controlled by a valve (38); and an electronic control device (58) for the valve, **characterized in that** the control device (58) is designed to open and close the valve (38) in intervals with a frequency that is adapted to the length of the dispensing line (26, 32) in such a way that grit charges (70) which are ejected in the individual open periods of the valve consolidate in the dispensing line to form a steady grit flow.

2. The device according to claim 1, wherein the valve (38) is a magnetically operated valve with two switch positions.

3. The device according to claim 2, wherein the valve (38) is a flap valve that keeps the pressure line (22) open and blocks the bypass passage (34) in one position and blocks the pressure line (22) and keeps the bypass passage (34) open in the other position.

4. The device according to any of the preceding claims, wherein the bypass (34, 44, 46) comprises two bypass passages (34, 44) only one of which is adapted to be opened and closed by the valve (38) that is operated in alternating intervals.

5. The device according to claim 4, wherein at least one of the bypass passages (34, 44) is adapted to be changed in its open cross-section by another valve (42) independently of the state of the valve (38) that is operated in alternating intervals.

6. The device according to claim 4 or 5, wherein the two bypass passages (34, 44) are connected to the dispensing line (26) via a common third bypass passage (46).

7. The device according to any of the preceding claims, wherein the pressure line (22), the nozzle (24), at least a part of the dispensing line (26), and the intake channel (28) are formed in a body (14) that forms part of a bottom of the grit tank (10), and wherein the valve (38) is disposed on the body (14) and inside of the grit tank (10).

8. The device according to claim 7, wherein electric leads (54) for the valve (38) extend inside of the body (14) to a connector (56) that is located at an accessible position outside of the grit tank (10) and adapted to be connected to the control device (58).

9. The device according to any of the preceding claims, wherein the control device (58) is configured to vary a duty ratio with which the valve (38) is opened and closed in accordance with demand.

10. The device according to claim 9, wherein the control device (58) is configured for varying the duty ratio as dependent upon a travel speed of the rail vehicle and as dependent upon a performance of the compressed air source (18).

11. The device according to claim 9 or 10, wherein the control device (58) is configured for operating the valve (38) with a pulse width modulation signal having a variable frequency, wherein the duration of duty pulses of the pulse width modulation signal as well as the duration of gaps between these duty pulses do not drop below a certain minimum duration and duty ratios close to 0 % as well as duty ratios close to 100 % are realized by varying the frequency of the pulse width modulation signal within a predetermined range of variation at fixed duration of the duty pulses and the pulse gaps.

## Revendications

1. Dispositif de distribution de matière à épandre pour des véhicules ferroviaires, comportant un réservoir de matière à épandre (10), une source d'air comprimé (18) reliée à une conduite de distribution (26) de la matière à épandre par l'intermédiaire d'une conduite sous pression (22) et d'une buse (24), un canal d'aspiration (28) par l'intermédiaire duquel la matière à épandre peut être acheminée à partir du réservoir de matière à épandre (10) dans la conduite de distribution (26), une dérivation (34, 44, 46) qui mène de la conduite sous pression (22) jusqu'à un point situé dans la conduite de distribution (26) en amont de l'embouchure du canal d'aspiration (28), en contournant la buse (24), et dont la section de passage peut être commandée par une vanne (38), et comportant un dispositif de commande électronique (58) pour la vanne (38), **caractérisé en ce que** le dispositif de commande (58) est conçu de manière à ouvrir et fermer la vanne (38) par intermittence, à une fréquence qui est adaptée à la longueur de la conduite de distribution (26 ; 32) de telle sorte que les charges (70) de matière à épandre éjectées pendant les périodes d'ouverture individuelles de la vanne dans la conduite de distribution s'accumulent pour former un écoulement constant de matière à épandre.

2. Dispositif selon la revendication 1, dans lequel la vanne (38) est une vanne à commande magnétique avec deux positions de commutation.

3. Dispositif selon la revendication 2, dans lequel la vanne (38) est un clapet qui, dans une position de commutation, maintient la conduite sous pression (22) ouverte et bloque un canal de dérivation (34), et qui, dans l'autre position de commutation, bloque la conduite sous pression (22) et maintient le canal de dérivation (34) ouvert.

4. Dispositif selon l'une des revendications précédentes, dans lequel la dérivation (34, 44, 46) comporte deux canaux de dérivation parallèles (34, 44) dont l'un doit être ouvert et fermé par la vanne (38) commandée par intermittence.

5. Dispositif selon la revendication 4, dans lequel la section transversale d'ouverture d'au moins un des canaux de dérivation (34, 44) peut être changée par une vanne supplémentaire (42) indépendamment de l'état de la vanne (38) commandée par intermittence.

6. Dispositif selon la revendication 4 ou 5, dans lequel les deux canaux de dérivation (34, 44) sont reliés à la conduite de distribution (26) par l'intermédiaire d'un troisième canal de dérivation commun (46).

7. Dispositif selon l'une des revendications précédentes, dans lequel la conduite sous pression (22), la buse (24), au moins une partie de la conduite de distribution (26) et le canal d'aspiration (28) sont formés dans un bloc de carter (14) formant une partie du fond du réservoir de matière à épandre (10), et dans lequel la vanne (38) est agencée à l'intérieur du réservoir de matière à épandre (10) sur le bloc de carter (14).

8. Dispositif selon la revendication 7, dans lequel des fils d'alimentation électriques (54) pour la vanne (38) sont guidés à l'intérieur du bloc de carter (14) jusqu'à une douille de raccordement (56) située dans une position accessible à l'extérieur du réservoir de matière à épandre (10) et pouvant être raccordée au dispositif de commande (58).

9. Dispositif selon l'une des revendications précédentes, dans lequel le dispositif de commande (58) est configuré pour faire varier le taux d'impulsions auquel la vanne (38) est ouverte et fermée, en fonction de la situation.

10. **Dispositif** selon la revendication 9, dans lequel le dispositif de commande (58) est configuré pour faire varier le taux d'impulsions en fonction de la vitesse de déplacement du véhicule ferroviaire et en fonction de la puissance de la source d'air comprimé (18).

11. Dispositif selon la revendication 9 ou 10, dans lequel le dispositif de commande (58) est configuré pour piloter la vanne (38) avec un signal de modulation d'impulsions en durée ayant une fréquence variable, dans lequel la durée des impulsions utiles du signal de modulation d'impulsions en durée ainsi que la durée des espaces entre ces impulsions utiles ne chutent pas en dessous d'une durée minimale déterminée, et des taux d'impulsions proches de 0 % ainsi que des taux d'impulsions proches de 100 % sont réalisés de telle sorte que la fréquence du signal de modulation d'impulsions en durée est abaissée dans les limites d'une plage de variation prédéfinie, à une durée fixe des impulsions utiles ou des espaces entre les impulsions.
